# EUROPÄISCHE PATENTSCHRIFT

(11) **EP 3 263 393 B1**
(45) Veröffentlichungstag und Bekanntmachung des Hinweises auf die Patenterteilung: **04.03.2020**
(21) Anmeldenummer: 17175413.8
(22) Anmeldetag: 12.06.2017
(51) Int. Cl.: B60N 2/02, B60N 2/50, B60N 2/54, B60N 2/52

(54) **FEDERUNGSVORRICHTUNG**
SUSPENSION DEVICE
SYSTÈME DE SUSPENSION

(30) Priorität: 01.07.2016 DE 102016112106
(43) Veröffentlichungstag der Anmeldung: 03.01.2018
(73) Patentinhaber: GRAMMER AG, 92224 Amberg (DE)
(72) Erfinder: Lorey, Konstantin, 92546 Schmidgaden (DE)
(74) Vertreter: Hannke, Christian

(56) Entgegenhaltungen:
- WO-A1-91/04881
- DE-U- 1 896 880
- GB-A- 2 166 948

## Beschreibung

Die Erfindung betrifft eine Federungsvorrichtung, insbesondere für einen Fahrzeugsitz, umfassend ein Federungsoberteil und ein Federungsunterteil, welche durch eine erste Verbindungsschwinge und eine zweite Verbindungsschwinge miteinander verbindbar sind.

Es sind aus dem Stand der Technik derartige Federungsvorrichtungen für Fahrzeugsitze bekannt, wobei das Federungsoberteil, das Federungsunterteil, die erste und die zweite Verbindungsschwinge ein Parallelogramm bilden, so dass das Federungsoberteil parallel zu dem Federungsunterteil auch im Falle einer Federbewegung ist. Die Federungsvorrichtungen umfassen zur Federung des Fahrzeugsitzes vorzugsweise eine Feder, wobei die Ausschubkraft der Federungsvorrichtung durch Spannung der Feder verstellt werden kann.

Wenn sich jedoch ein relativ schwerer Fahrer auf dem Fahrzeugsitz niederlässt und die Ausschubkraft entsprechend seines Gewichtes einstellen möchte, muss er die Vorspannung der Feder deutlich erhöhen, was einen erheblichen Kraftaufwand bedeutet und hierdurch auch eine schnelle Verstellung nicht gegeben ist. Eine gattungsgemässe Federvorrichtung für einen Fahrzeugsitz ist aus dem Dokument GB 2166948 bekannt.

Es ist demzufolge Aufgabe der vorliegenden Erfindung, eine Federungsvorrichtung bereitzustellen, mittels welcher schnell und mit wenig Kraftaufwand eine Verstellung der Ausschubkraft durchführbar ist.

Diese Aufgabe wird gemäß den Merkmalen des Patentanspruches 1 gelöst. Vorteilhafte Ausgestaltungen der Erfindung finden sich in den abhängigen Patentansprüchen.

Kerngedanke der Erfindung ist es, eine Federungsvorrichtung für einen Fahrzeugsitz, umfassend ein Federungsoberteil und ein Federungsunterteil, welche durch eine erste Verbindungsschwinge und eine zweite Verbindungsschwinge miteinander verbunden sind und die erste und die zweite Verbindungsschwinge bei einer schwingenden Bewegung des Federungsoberteils relativ zum Federungsunterteil jeweils um eine Schwenkachse verschwenkt werden, wobei an der ersten Verbindungsschwinge ein um eine erste Drehachse drehbares erstes Zahnradelement zum Verstellen einer Position einer ersten Federeinheit, wodurch eine Federkraft und eine Federrate der Federungsvorrichtung veränderbar sind, angeordnet ist, wobei das Zahnradelement mit einem um eine zweite Drehachse drehbarem zweitem Zahnradelement in Wirkkontakt steht.

Besonders vorteilhaft ist das erste Zahnradelement gegenüber der ersten Verbindungsschwinge drehbar angeordnet. Weiter vorteilhaft ist die erste Verbindungsschwinge mittels einer ersten Schwenkachse und die zweite Verbindungsschwinge mittels einer zweiten Schwenkachse an dem Federungsunterteil angeordnet und somit jeweils um die entsprechende Schwenkachse verschwenkbar.

Besonders vorteilhaft umfasst das Federungsoberteil einen Fahrzeugsitz, insbesondere einen Fahrzeugsitz mit einem Sitzteil und einer Rückenlehne.

Unter dem Begriff "Federeinheit" wird eine Einheit verstanden, die zumindest eine Feder im herkömmlichen Sinne umfasst. Eine Federeinheit bzw. eine Feder kann mechanisch oder hydraulisch oder pneumatisch ausgestaltet sein. Vorteilhaft kann die Feder auch als die Federeinheit selbst verstanden werden. Bei dieser Feder handelt es sich vorzugsweise um eine Zugfeder, die auf vielfältige Weise ausgestaltet sein kann. Durch eine mechanische Ausbildung kann das Gewicht der Federungsvorrichtung weiter reduziert werden und ein einfacherer Aufbau bereitgestellt werden.

Bevorzugt bilden das Federungsoberteil, das Federungsunterteil und die erste und zweite Verbindungsschwinge ein Parallelogramm. Vorteilhaft sind die erste und zweite Verbindungsschwinge sowohl mit dem Federungsunterteil als auch dem Federungsoberteil schwenkbar verbunden, wobei die erste Verbindungsschwinge mittels einer dritten Schwenkachse und die zweite Verbindungsschwinge mittels einer vierten Schwenkachse mit dem Federungsoberteil schwenkbar verbunden sind.

Gemäß einer bevorzugten Ausführungsform umfasst die Federungsvorrichtung mehr als eine Federeinheit, also zusätzlich zu der ersten Federeinheit noch eine zweite, dritte, usw. Federeinheit, wobei jede Federeinheit mindestens eine Feder umfasst, so dass die Bauhöhe der Federungsvorrichtung hierdurch noch weiter reduziert werden kann, da eine auf die Federungsvorrichtung eingeleitete Kraft von zwei oder mehr Federn aufgenommen werden kann. Die Federn können also hierdurch kleiner dimensioniert werden. Besonders vorteilhaft ist es, zwei Federn für die Federungsvorrichtung vorzusehen. Es können aber auch eine beliebige Anzahl von Federn, insbesondere drei oder mehr, vorgesehen sein.

Der erste und der zweite Endbereich der Federeinheit sind hierbei vorzugsweise das erste und das zweite Ende der Feder, wobei besonders bevorzugt das erste und/oder das zweite Ende der Feder eine Öse oder dergleichen aufweisen, so dass die Feder bzw. die Federeinheit leicht mit dazu vorgesehene Öffnungen oder Vorrichtungen verbunden, insbesondere eingehängt bzw. aufgehängt werden können.

Erfindungsgemäß wird die Federrate und die Ausschubkraft der Federungsvorrichtung gemäß Anspruch 1 mittels einer Verstellung der Position der ersten Federeinheit und nicht mittels einer Veränderung der Federspannung der Federeinheit, also insbesondere der Feder, geändert.

Eine Verstellung der Position ist hierbei gleichbedeutend mit einer Lageänderung der Federeinheit oder der Federeinheiten im Raum. Durch die Positionsveränderung der Federeinheit bzw. der Feder der Federeinheit wird ein an der Federeinheit angreifender Hebel in seiner Länge verändert.

Gemäß einer bevorzugten Ausführungsform ist es besonders vorteilhaft, wenn die erste Federeinheit mit einem ersten Endbereich mittels einer durch das erste Zahnradelement betätigbaren Verstelleinrichtung mit der ersten Verbindungsschwinge und mit einem zweiten Endbereich mit dem Federungsunterteil verbunden ist.

Die Position des zweiten Endbereiches der ersten Federeinheit ist hierbei im Wesentlichen konstant. Vorteilhaft ist die Verstelleinrichtung mit dem ersten Zahnradelement starr verbunden, so dass bei einer Drehung des ersten Zahnradelementes entsprechend die Verstelleinrichtung betätigt wird.

Dies hat zur Folge, dass mittels der Verstelleinrichtung durch Betätigung des ersten Zahnradelements insbesondere die Position bzw. Lage des ersten Endbereichs der ersten Federeinheit verstellbar ist. Insbesondere wird dadurch der erste Endbereich relativ zu dem Federungsunterteil, welches vorzugsweise starr mit einem Boden, einer Karosserie oder dergleichen verbindbar ist, verstellt. Der an der ersten Federeinheit angreifende Hebel erstreckt sich dabei von einer ersten Schwenkachse der ersten Verbindungsschwinge mit dem Federungsunterteil bis zu dem ersten Endbereich der Federeinheit. Durch Verstellung bzw. Verschieben des ersten Endbereichs der Federeinheit ist die Länge des Hebels veränderbar, so dass hierdurch die Federrate und die Ausschubkraft der Federungsvorrichtung veränderbar ist. Der erste Endbereich umfasst also entsprechend den Krafteinleitungspunkt der Federeinheit.

Die Ausschubkraft wird aufgrund des folgenden Zusammenhangs verändert. Wie bekannt ist, ist ein Drehmoment proportional zu der Länge eines Hebels, wenn die angreifende Kraft konstant ist. Durch Verstellung der Position des ersten Endbereichs wird die Länge des Hebels verändert. Sitzt ein verhältnismäßig schwerer Fahrer auf dem Fahrzeugsitz, der über die erfindungsgemäße Federungsvorrichtung verfügt, so muss der Hebel entsprechend länger sein als bei einem leichten Fahrer.

Dadurch, dass erfindungsgemäß nicht die Federspannung zur Veränderung der Ausschubkraft verändert wird, sondern nur die Lage der Federeinheit verändert wird, ist lediglich eine geringe Kraft seitens eines Benutzers notwendig, um die Ausschubkraft der Federungsvorrichtung zu verändern. Hierdurch wird auch eine sehr schnelle Verstellung der Ausschubkraft ermöglicht.

Gemäß einer bevorzugten Ausführungsform ist ein Betätigungselement vorgesehen, welches mit dem zweiten Zahnradelement mittels der zweiten Drehachse verbunden ist, mittels welches Betätigungselements das erste Zahnradelement betätigbar und einstellbar ist.

Alternativ ist es hierbei denkbar, dass ein elektrischer Antrieb, ein elektrisches Motorgetriebe oder ein elektrischer Motor mit dem zweiten Zahnradelement mittels der zweiten Drehachse verbunden ist, wobei mittels des Motors das zweite Zahnradelement betätigbar ist und entsprechend der Betätigung des zweiten Zahnradelements das erste Zahnradelement betätigbar und einstellbar ist. Bevorzugterweise ist der Antrieb, das Motorgetriebe oder der Motor selbsthemmend ausgebildet.

Gemäß einer besonders bevorzugten Ausführungsform sind die erste Drehachse des ersten Zahnradelements und die zweite Drehachse des zweiten Zahnradelements senkrecht zueinander ausgebildet. Weiter vorteilhaft erstreckt sich die erste Drehachse in eine Sitzbreitenrichtung B und die zweite Drehachse in eine Sitzlängsrichtung L. Besonders bevorzugt bilden das erste und das zweite Zahnradelement ein Schneckengetriebe.

Alternativ können gemäß einer anderen bevorzugten Ausführungsform die erste Drehachse des zweiten Zahnradelements und die zweite Drehachse des zweiten Zahnradelements senkrecht zueinander ausgebildet sein.

Weiter vorteilhaft ist das Betätigungselement im Bereich einer Sitzvorderseite oder im Bereich der Sitzrückseite angeordnet.

Diese Federrate soll auch während eines Schwingvorganges des Federungsoberteils relativ zum Federungsunterteil beibehalten werden. Durch die relative Bewegung des Federungsoberteils gegenüber dem Federungsunterteil wird entsprechend das erste Zahnradelement aufgrund der Verbindung mit der Verbindungsschwinge relativ zum Federungsunterteil bewegt.

Entsprechend der Anordnung des Federungsunterteils, des Federungsoberteils, der ersten und zweiten Verbindungsschwinge als Parallelogramm bewegt sich das erste Zahnradelement bei einer Relativbewegung des Federungsoberteils gegenüber dem Federungsunterteils auf einer Kreisbahn. Ebenso bewegt sich die erste Verbindungsschwinge mit dem darauf angeordneten ersten Zahnradelement auf einer Kreisbahn.

Vorzugsweise ist das zweite Zahnradelement, wie auch das erste Zahnradelement, mit der ersten Verbindungsschwinge verbunden. Das zweite Zahnradelement wird demnach ebenso bei einer Verschwenkung der ersten Verbindungsschwinge um die erste Schwenkachse auf einer Kreisbahn bewegt. Durch die Anordnung des ersten und zweiten Zahnradelements entsteht hierbei keine Relativbewegung der Zahnradelemente zueinander, so dass auch während eines Schwingens des Federungsoberteils gegenüber dem Federungsunterteil keine Veränderung bzw. Beeinflussung des SEAT-Werts hervorgerufen wird.

Gemäß einer weiteren Ausführungsform weist die Verstelleinrichtung eine erste Einhängevorrichtung auf, mit welcher der erste Endbereich der ersten Federeinheit verbindbar ist, wobei die erste Einhängevorrichtung exzentrisch an der Verstelleinrichtung angeordnet ist.

Bei Verstellung der Position der ersten Federeinheit wird durch die exzentrische Anordnung vorzugsweise der erste Endbereich gedreht und so die Position der ersten Federeinheit verändert.

Gemäß einer weiteren Ausführungsform weist die Verstelleinrichtung eine zweite Einhängevorrichtung auf, mit welcher ein erster Endbereich eines Dämpfers verbindbar ist, wobei die zweite Einhängevorrichtung exzentrisch mit der Verstelleinrichtung verbunden ist und ein zweiter Endbereich des Dämpfers mit dem Federungsunterteil verbindbar ist.

Durch eine derartige Anordnung des Dämpfers ist es daher möglich, die Dämpferleistung des Dämpfers und dadurch die Dämpferleistung der Federung bei Verstellung der Ausschubkraft, vorzugsweise dem Fahrergewicht, anzupassen. Wird der Hebel verlängert, so erhöhen sich entsprechend auch der Hub des Dämpfers und der wirksame Hebel für eine Dämpferkraftanleitung. Entsprechend wird bei einer Verkürzung des Hebels der Hub des Dämpfers verringert.

Gemäß einer bevorzugten Ausführungsform entspricht die erste Drehachse des ersten Zahnradelements der ersten Schwenkachse der ersten Verbindungsschwinge. Hierdurch ist es möglich, das erste Zahnradelement bis auf Drehung ortsfest anzuordnen.

Bewegt sich hierbei das Federungsoberteil während einer Auslenkung desselben relativ gegenüber dem Federungsunterteil, so wird die erste Verbindungsschwinge um die erste Schwenkachse herum verschwenkt. Da mittels der ersten Drehachse das erste Zahnradelement mit der Verbindungsschwinge verbunden ist, erfährt das erste Zahnradelement unabhängig von der Position der ersten Drehachse ebenso eine Schwenkbewegung um die erste Schwenkachse herum.

Entspricht eben nun die erste Drehachse der ersten Schwenkachse, so wird das erste Zahnradelement nur ortsfest gedreht und nicht um die erste Schwenkachse verschwenkt. Daher ist es nicht nötig, dass das zweite Zahnradelement der Bewegung der ersten Verbindungsschwinge folgt, so dass auch das zweite Zahnradelement bis auf Drehung ortsfest angeordnet werden kann.

Ist es hingegen der Fall, dass die erste Drehachse nicht mit der ersten Schwenkachse übereinstimmt, so wird bei einer Verschwenkung der ersten Verbindungsschwinge um die erste Schwenkachse ebenso das erste Zahnradelement um die erste Schwenkachse verschwenkt. Demzufolge ist es auch nötig, dass sich das zweite Zahnradelement dieser Verschwenkbewegung anpasst. Wird etwa das erste Zahnradelement im Uhrzeigersinn verschwenkt, also in Sitzlängsrichtung nach vorne, so bewegt sich das Zahnradelement auch nach unten. Es ist hierbei also zu beachten, dass das zweite Zahnradelement der Bewegung des ersten Zahnradelements folgt, so dass weiterhin ein Wirkkontakt zwischen dem ersten und dem zweiten Zahnradelement besteht.

Hierbei erscheint es daher sinnvoll, die zweite Schwenkachse des zweiten Zahnradelements ebenfalls mit zumindest der ersten Verbindungsschwinge zu verbinden, da hierdurch dann der zweiten Schwenkachse die Bewegung der ersten Verbindungsschwinge übertragen werden kann.

Generell kann die Federrate bzw. die Dämpferleistung im Wesentlichen proportional zum Fahrergewicht geändert werden, wodurch die Schwingung des Federungsoberteils relativ zum Federungsunterteil entsprechend dem Fahrergewicht angepasst werden kann. Hierdurch ergeben sich insgesamt bessere SEAT-Werte.

Darüber hinaus ergeben sich für den Fall, dass ein elektrischer Motor oder dergleichen vorgesehen ist, weitere Vorteile.

Beispielsweise kann der elektrische Motor entsprechend gesteuert werden, so dass eine Art Memory Funktion, insbesondere für die Höhenverstellung des Sitzes, erhalten werden kann. So kann etwa bei entsprechender Höheneinstellung des Sitzes und/oder dem Gewicht des Fahrers die Federeinheit entsprechend den Parametern eingestellt werden.

Es ist auch denkbar, dass während einer Fahrt die Federkraft bzw. die Federrate interaktiv durch entsprechende Drehung des ersten Zahnradelements durch den Motor die SEAT-Werte beeinflusst werden können.

Weitere vorteilhafte Ausführungsformen ergeben sich aus den Unteransprüchen.

Weitere Ziele, Vorteile und Zweckmäßigkeiten der vorliegenden Erfindung sind der nachfolgenden von der Beschreibung in Verbindung mit der Zeichnung zu entnehmen. Hierbei zeigen:
- Fig. 1: zeigt eine bevorzugte Ausführungsform in einer schematischen Seitenansicht;
- Fig. 2: zeigt eine weitere Ausführungsform in einer schematischen Seitenansicht;
- Fig. 3A: zeigt eine alternative Ausführungsform in einer ersten Seitenansicht;
- Fig. 3B: zeigt die alternative Ausführungsform gemäß Figur 3A in einer zweiten Seitenansicht;
- Fig. 3C: zeigt die Ausführungsform gemäß Figuren 3A und 3B in einer Draufsicht.

In den Figuren sind gleiche Bauteile jeweils mit den entsprechenden Bezugszeichen zu verstehen. Zur besseren Übersichtlichkeit können in manchen Figuren Bauteile nicht mit einem Bezugszeichen versehen sein, die jedoch an anderer Stelle bezeichnet worden sind.

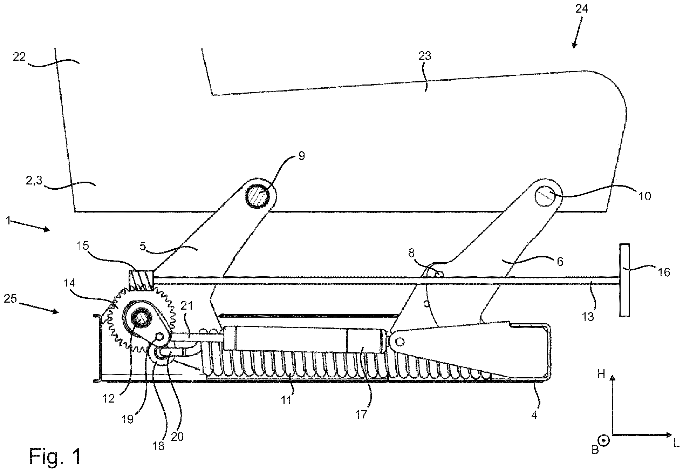

In der Figur 1 ist eine Federungsvorrichtung 1 gemäß einer bevorzugten Ausführungsform zu erkennen, wobei ein Federungsoberteil 3 mittels einer ersten 5 und einer zweiten Verbindungsschwinge 6 mit einem Federungsunterteil 4 verbunden ist und die erste Verbindungsschwinge 5 um eine erste Schwenkachse 7 und die zweite Verbindungsschwinge 6 um eine zweite Schwenkachse 8 schwenkbar sind.

Das Federungsoberteil 3 umfasst hierbei den Fahrzeugsitz, insbesondere ein Sitzteil 23 und eine Rückenlehne 22.

Wie weiter zu erkennen ist, ist ein erstes Zahnradelement 14 mittels einer ersten Drehachse 12 an der ersten Verbindungsschwinge 5 angeordnet, wobei das erste Zahnradelement 14 mit einem zweiten Zahnradelement 15 in Wirkkontakt steht.

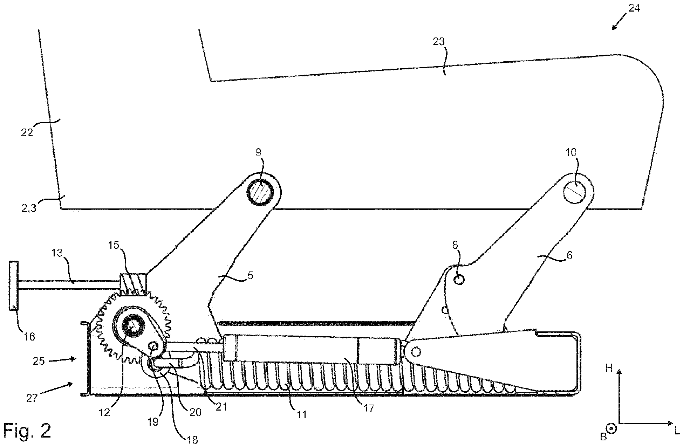

Durch Betätigung des zweiten Zahnradelements 15, vorliegend durch Betätigung eines Betätigungselements 16, welches an der zweiten Drehachse 13 in einem Bereich der Sitzvorderseite 24 oder der Sitzrückseite 25, wie in Figur 2 dargestellt, angeordnet ist, wird ebenso das erste Zahnradelement 14 betätigt und insbesondere eingestellt. Es ist aber auch denkbar, dass das Betätigungselement 16 seitlich an dem Sitz angeordnet ist, insbesondere dann, wenn die erste Drehachse 12 parallel zu der zweiten Drehachse 13 ausgebildet ist.

Mit dem zweiten Zahnradelement 15 ist eine Verstelleinrichtung 25 mit einer ersten Einhängevorrichtung 18 und einer zweiten Einhängevorrichtung 19, wobei die erste 18 und die zweite Einhängevorrichtung 19 exzentrisch an dem zweiten Zahnradelement angeordnet sind. Darüber hinaus ist mit der ersten Einhängevorrichtung 18 ein erster Endbereich 20 der Federeinheit 11 verbunden und mit der zweiten Einhängevorrichtung 19 ein erster Endbereich 21 eines Dämpfers 17. Ein zweiter Endbereich 20' der Federeinheit 11 und ein zweiter Endbereich 21' des Dämpfers 17 sind hierbei mit dem Federungsunterteil 4 verbunden.

Durch Drehung des ersten Zahnradelements 14 werden dabei die erste 18 und die zweite Einhängevorrichtung 19 um die erste Drehachse 13 verschwenkt, wodurch die Position der Federeinheit 11 und des Dämpfers 17 verändert wird und hierdurch die Dämpferleistung des Dämpfers 17, die Ausschubkraft und die Federrate der Federeinheit 11.

Das erste Zahnradelement 14 wird hierbei durch ein zweites Zahnradelement 15 betätigt, wobei das erste 14 und das zweite Zahnradelement 15 zusammen ein Schneckengetriebe bilden. Durch Betätigen des Betätigungshebels 16, also einer Drehung des Betätigungshebels 16 um die zweite Drehachse 13, welche vorliegend senkrecht zu der ersten Drehachse 12 ausgebildet ist, wird das zweite Zahnradelement 15 und dadurch das mit dem zweiten Zahnradelement 15 in Wirkkontakt stehende erste Zahnradelement 14 betätigt und eingestellt. Durch die Einstellung der Position des ersten Zahnradelements 14 wird insbesondere die Federrate bzw. die Ausschubkraft festgelegt.

Die zweite Drehachse 13 ist hierbei zumindest mit der ersten Verbindungsschwinge 5 verbunden, da vorliegend die erste Schwenkachse 7 nicht mit der ersten Drehachse 12 übereinstimmt.

Durch diese Anordnung ist es hierbei möglich, dass das zweite Zahnradelement 15 der Bewegung, insbesondere der Schwenkbewegung der ersten Verbindungsschwinge 5 bei einer Federbewegung des Federungsoberteils 3 relativ zum Federungsunterteil 4, des ersten Zahnradelements 14 folgen kann und so weiterhin das erste 14 und das zweite Zahnradelement 15 in Wirkkontakt stehen.

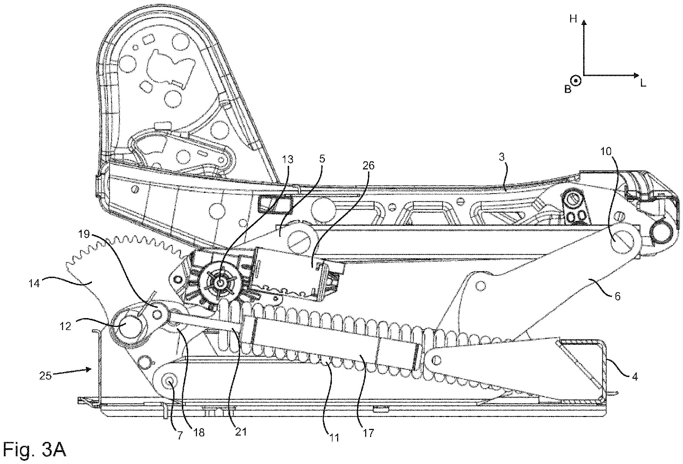

Das erste Zahnradelement 14 kann dabei als ein kreisförmiges Zahnrad oder als ein Kreissektor-förmiges Zahnrad ausgebildet sein, wie beispielsweise in den Figuren 3A bis 3C dargestellt.

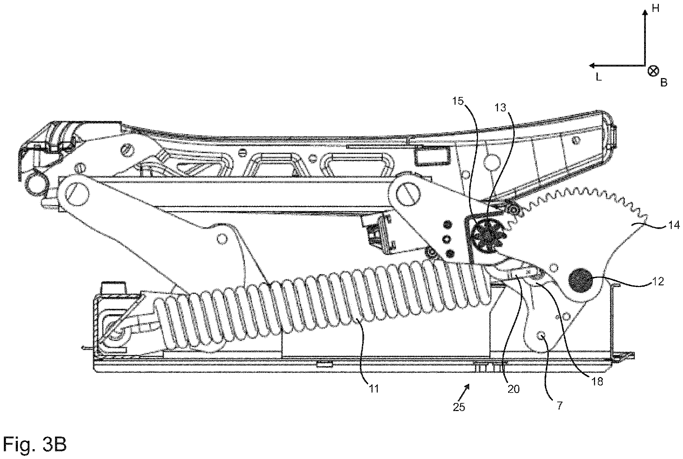

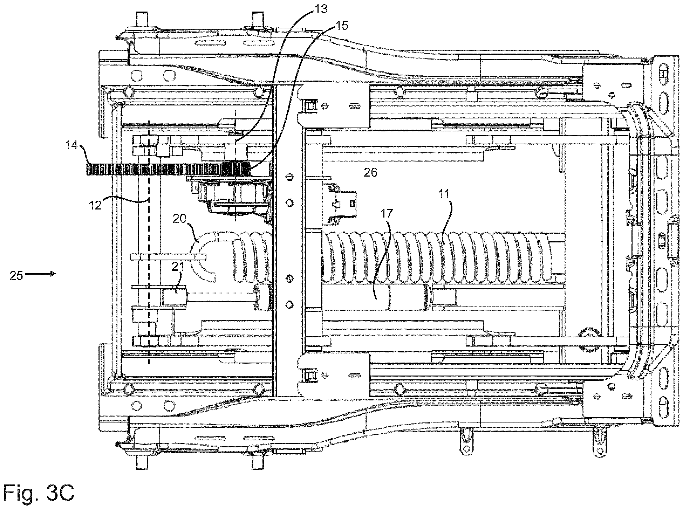

Die Figuren 3A bis 3C zeigen eine weitere Ausführungsform, wobei das zweite Zahnradelement 15 durch einen elektrischen Motor 26 bzw. einen elektrischen Antrieb 26 antreibbar ist. Die Figur 3A zeigt die Federungsvorrichtung 1 in einer ersten Seitenansicht, Figur 3B die Federungsvorrichtung 1 in einer zweiten Seitenansicht und die Figur 3C die Federungsvorrichtung 1 in einer Draufsicht.

Im Folgenden ist elektrischer Motor oder Motor als Oberbegriff über elektrischer Motor, elektrischer Antrieb, elektrisches Motorgetriebe zu verstehen.

Gemäß dieser Ausführungsform ist die erste Drehachse 12 parallel zu der zweiten Drehachse 13 ausgebildet, wobei insbesondere die erste 12 und zweite Drehachse 12 in Sitzbreitenrichtung B verlaufend angeordnet sind.

Das erste Zahnradelement 14 ist hierbei Kreissektor-förmig ausgebildet, so dass der Platzbedarf reduziert werden kann. Wie weiter zu erkennen ist, ist auch der der elektrische Motor 26 mit der ersten Verbindungsschwinge 5 verbunden, so dass bei einer Verschwenkung der ersten Verbindungsschwinge 5 der Motor 26 entsprechend um die erste Schwenkachse 7 verschwenkt wird. Der Motor 26 ist mit dem zweiten Zahnradelement 15 verbunden, wie insbesondere der Figur 3B entnommen werden kann, so dass das zweite Zahnradelement 15 durch den Motor 26 um die zweite Drehachse 13 gedreht werden kann.

Durch Drehung des zweiten Zahnradelements 15 um die zweite Drehachse 13 wird durch die Verbindung des ersten 14 zum zweiten Zahnradelement 15 das erste Zahnradelement 14 um die erste Drehachse 12 gedreht und entsprechend die Position des ersten Endbereichs 20 der Federeinheit und die Position des ersten Endbereichs 21 des Dämpfers verändert durch Betätigung der Verstelleinrichtung 25 durch Drehung des ersten Zahnradelements 14. Die Figur 3C zeigt die Federungsvorrichtung 1 gemäß Figur 3A bzw. Figur 3B noch in einer Draufsicht.

### Bezugszeichenliste

- 1: Federungsvorrichtung
- 2: Fahrzeugsitz
- 3: Federungsoberteil
- 4: Federungsunterteil
- 5: Erste Verbindungsschwinge
- 6: Zweite Verbindungsschwinge
- 7: Erste Schwenkachse
- 8: Zweite Schwenkachse
- 9: dritte Schwenkachse
- 10: vierte Schwenkachse
- 11: Federeinheit
- 12: erste Drehachse
- 13: zweite Drehachse
- 14: erstes Zahnradelement
- 15: zweites Zahnradelement
- 16: Betätigungshebel
- 17: Dämpfer
- 18: erste Einhängvorrichtung
- 19: zweite Einhängvorrichtung
- 20: erster Endbereich der Federeinheit
- 21: erster Endbereich des Dämpfers
- 22: Rückenlehne
- 23: Sitzteil
- 24: Sitzvorderseite
- 25: Sitzrückseite

## Patentansprüche

1. Federungsvorrichtung (1) für einen Fahrzeugsitz (2), umfassend ein Federungsoberteil (3) und ein Federungsunterteil, welche durch eine erste Verbindungsschwinge (5) und eine zweite Verbindungsschwinge (6) miteinander verbunden sind und die erste (5) und die zweite Verbindungsschwinge (6) bei einer schwingenden Bewegung des Federungsoberteils (3) relativ zum Federungsunterteil (4) jeweils um eine Schwenkachse (7, 8) verschwenkt werden,
**dadurch gekennzeichnet, dass**
an der ersten Verbindungsschwinge (5) ein um eine erste Drehachse (12) drehbares erstes Zahnradelement (14) zum Verstellen einer Position einer ersten Federeinheit (11), wodurch eine Federkraft und eine Federrate der Federungsvorrichtung (1) veränderbar sind, angeordnet ist, wobei das erste Zahnradelement (14) mit einem um eine zweite Drehachse (13) drehbarem zweitem Zahnradelement (15) in Wirkkontakt steht.

2. Federungsvorrichtung (1) nach Anspruch 1,
**dadurch gekennzeichnet, dass**
die erste Federeinheit (11) mit einem ersten Endbereich (20) mittels einer durch das erste Zahnradelement (14) betätigbaren Verstelleinrichtung (25) mit der ersten Verbindungsschwinge (5) und mit einem zweiten Endbereich (20') mit dem Federungsunterteil (4) verbunden ist.

3. Federungsvorrichtung (1) nach Anspruch 2,
**dadurch gekennzeichnet, dass**
die Verstelleinrichtung (25) eine erste Einhängevorrichtung (18) aufweist, mit welcher die erste Federeinheit (11) verbindbar ist, wobei die erste Einhängevorrichtung (18) exzentrisch mit der Verstelleinrichtung (25) verbunden ist.

4. Federungsvorrichtung (1) nach Anspruch 2 oder 3,
**dadurch gekennzeichnet, dass**
die Verstelleinrichtung (25) eine zweite Einhängevorrichtung (19) aufweist, mit welcher ein erster Endbereich (21) eines Dämpfers (17) verbindbar ist, wobei die zweite Einhängevorrichtung (19) exzentrisch mit der Verstelleinrichtung (25) verbunden ist und ein zweiter Endbereich (21') des Dämpfers (17) mit dem Federungsunterteil (4) verbindbar ist.

5. Federungsvorrichtung (1) nach einem der vorangegangenen Ansprüche,
**dadurch gekennzeichnet, dass**
die erste Drehachse (12) des ersten Zahnradelements (14) und die zweite Drehachse (13) des zweiten Zahnradelements (15) senkrecht zueinander ausgebildet sind.

6. Federungsvorrichtung (1) nach einem der Ansprüche 1 bis 4,
**dadurch gekennzeichnet, dass**
die erste Drehachse (12) des ersten Zahnradelements (14) und die zweite Drehachse (13) des zweiten Zahnradelements (15) parallel zueinander ausgebildet sind.

7. Federungsvorrichtung (1) nach einem der vorangegangenen Ansprüche,
**dadurch gekennzeichnet, dass**
das zweite Zahnradelement (15) mittels eines handbetreibbaren Hebelelements betätigbar ist.

8. Federungsvorrichtung nach einem der Ansprüche 1 bis 6,
**dadurch gekennzeichnet, dass**
das zweite Zahnradelement (15) mittels eines elektrischen Motors, eines elektrischen Antrieb oder ein Motorgetriebe betätigbar ist.

## Claims

1. Suspension device (1) for a vehicle seat (2), comprising an upper suspension portion (3) and a lower suspension portion, which are interconnected by a first swivel connector (5) and a second swivel connector (6), and the first (5) and the second swivel connector (6) are pivoted in each case about a swivel pin (7, 8) in the case of an oscillating movement of the upper suspension portion (3) relative to the lower suspension portion (4),
**characterised in that**,
a first toothed wheel element (14) which is rotatable about a first axis of rotation (12) is arranged on the first swivel connector (5) for adjusting a position of a first spring unit (11), by means of which a spring force and a spring rate of the suspension device (1) is changeable, the first toothed wheel element (14) being in operative contact with a second toothed wheel element (15) which is rotatable about a second axis of rotation (13).

2. Suspension device (1) according to claim 1,
**characterised in that**
the first spring unit (11) is connected by a first end region (20) by means of an adjustment device (25) which can be operated by the first toothed wheel element (14) to the first swivel connector (5), and by a second end region (20') to the lower suspension portion (4).

3. Suspension device (1) according to claim 2,
**characterised in that**
the adjustment device (25) comprises a first suspending device (18), to which the first spring unit (11) is connectable, the first suspending device (18) being eccentrically connected to the adjustment device (25).

4. Suspension device (1) according to claim 2 or 3,
**characterised in that**
the adjustment device (25) comprises a second suspending device (19), to which a first end region (21) of a vibration damper (17) is connectable, the second suspending device (19) being eccentrically connected to the adjustment device (25), and a second end region (21') of the vibration damper (17) is connectable to the lower suspension portion (4).

5. Suspension device (1) according to one of the preceding claims,
**characterised in that**
the first axis of rotation (12) of the first toothed wheel element (14) and the second axis of rotation (13) of the second toothed wheel element (15) are formed to be perpendicular to one another.

6. Suspension device (1) according to one of claims 1 to 4,
**characterised in that**
the first axis of rotation (12) of the first toothed wheel element (14) and the second axis of rotation (13) of the second toothed wheel element (15) are formed in parallel with one another.

7. Suspension device (1) according to one of the preceding claims,
**characterised in that**
the second toothed wheel element (15) can be operated by means of a manually operable lever element.

8. Suspension device according to one of claims 1 to 6,
**characterised in that**
the second toothed wheel element (15) can be operated by means of an electric motor, an electric drive or a motor gear assembly.

## Revendications

1. Dispositif de suspension (1) pour un siège de véhicule (2), comportant une partie supérieure de suspension (3) et une partie inférieure de suspension, lesquelles sont reliées l'une à l'autre par un premier bras oscillant de liaison (5) et un second bras oscillant de liaison (6), et le premier (5) et le second bras oscillant de liaison (6) pivotent, lors d'un mouvement oscillant de la partie supérieure de suspension (3) par rapport à la partie inférieure de suspension, dans chaque cas autour d'un axe de pivotement (7, 8),
**caractérisé par le fait que**
sur le premier bras oscillant de liaison (5) est disposé un premier élément roue dentée (14) apte à tourner autour d'un premier axe de rotation (12) pour le réglage d'une position d'une première unité à ressort (11), ce par quoi une force élastique et une raideur du dispositif de suspension (1) sont modifiables, le premier élément roue dentée (14) étant en contact actif avec un second élément roue dentée (15) apte à tourner autour d'un second axe de rotation (13).

2. Dispositif de suspension (1) selon la revendication 1,
**caractérisé par le fait que**
la première unité à ressort (11) est reliée, par une première région d'extrémité (20), au moyen d'un dispositif de réglage (25) actionnable par le premier élément roue dentée (14), avec le premier bras oscillant de liaison (5), et, par une seconde région d'extrémité (20'), avec la partie inférieure de suspension (4).

3. Dispositif de suspension (1) selon la revendication 2,
**caractérisé par le fait que**
le dispositif de réglage (25) présente un premier dispositif de suspension (18) avec lequel la première unité à ressort (11) est apte à être reliée, le premier dispositif de suspension (18) étant relié de façon excentrique avec le dispositif de réglage (25).

4. Dispositif de suspension (1) selon l'une des revendications 2 ou 3,
**caractérisé par le fait que**
le dispositif de réglage (25) présente un second dispositif de suspension (19) avec lequel une première région d'extrémité (21) d'un amortisseur (17) est apte à être reliée, le second dispositif de suspension (19) étant relié de façon excentrique avec le dispositif de réglage (25), et une seconde région d'extrémité (21') de l'amortisseur (17) étant apte à être reliée avec la partie inférieure de suspension (4).

5. Dispositif de suspension (1) selon l'une quelconque des revendications précédentes,
**caractérisé par le fait que**
le premier axe de rotation (12) du premier élément roue dentée (14) et le second axe de rotation (13) du second élément roue dentée (15) sont configurés perpendiculairement l'un à l'autre.

6. Dispositif de suspension (1) selon l'une des revendications 1 à 4,
**caractérisé par le fait que**
le premier axe de rotation (12) du premier élément roue dentée (14) et le second axe de rotation (13) du second élément roue dentée (15) sont configurés parallèlement l'un à l'autre.

7. Dispositif de suspension (1) selon l'une quelconque des revendications précédentes,
**caractérisé par le fait que**
le second élément roue dentée (15) est actionnable au moyen d'un élément levier actionnable manuellement.

8. Dispositif de suspension (1) selon l'une des revendications 1 à 6,
**caractérisé par le fait que**
le second élément roue dentée (15) est actionnable au moyen d'un moteur électrique, d'une commande électrique ou d'un motoréducteur.
